# EUROPEAN PATENT APPLICATION

(11) **EP 1 785 886 A1**
(43) Date of publication of application: **16.05.2007**
(21) Application number: 06255305.2
(22) Date of filing: 16.10.2006
(51) Int. Cl.: G06F 13/40

(54) **Electronic device and data communication control method**

(30) Priority: 18.10.2005 JP 2005303169
(71) Applicant: ORION ELECTRIC CO., Ltd., Fukui 915-8555 (JP)
(72) Inventor: Inotani, Kazunori, c/o Intellectual Property Dept., Echizen-city Fukui 915-8555 (JP)
(74) Representative: Paget, Hugh Charles Edward

(57) **Abstract**

The invention provides an electronic device provided with several ICs designed to prevent misoperation of the device due to data collision on the data transmission path to which an external apparatus is connected. By connecting a connector (40) for connection of a PC (2) to a data reception line (60) and data transmission line (50) which connect a main microcontroller (10), DVD microcontroller (20) and HDD microcontroller (30), data transmission paths to connect the PC (2) are reduced and by controlling through voltage control resistors (R1,R2) so that the signal level generated at an RXD terminal (12) differs between times of data collision and normal operation and any one of signals of the DVD microcontroller (20), HDD microcontroller (30) and PC (2) can be read, misoperation in the event of data collision is prevented.

## Description

### BACKGROUND OF THE INVENTION

### Field of the Invention

The present invention relates to an electronic device provided with a plurality of ICs, and more particularly, to an electronic device configured so as to connect an external apparatus for developing or debugging software written into the plurality of ICs.

### Description of the Related Art

There are many composite type electronic devices having a plurality of different functions. For such a composite type electronic device, ICs for processing their respective functions are often formed modularized and a plurality of ICs is provided in the device. In this case, if the respective ICs operate independently of each other, the device would not function, and therefore an IC which controls the operation of the entire device (master IC, which may also be called a "main microcontroller" or the like) controls the operation of the respective ICs and to realize transmission/reception of data between the main microcontroller and respective ICs, it is necessary to interconnect them. The main microcontroller and respective ICs may be connected through individual data transmission paths, but in this case, it is necessary to form terminals in the main microcontroller for connection with the respective ICs and when the number of ICs connected to the main microcontroller increases, there will be a shortage of space for forming the terminals and wider circuit spaces will also be required for forming the respective data transmission paths. For this reason, a method of communicating with a plurality of apparatuses using the same signal line is used. As a method of identifying an IC from which a signal comes, a judging method using a communication protocol such as I2C or a method of using different communication speeds for different ICs is used.

Conventional techniques related to such a communication scheme are disclosed in Japanese Patent Laid-Open Publications No. 8-163653, No. 10-84590, No. 11-205396, and No. 2002-101076 (Patent Documents 1 to 4) or the like.

In development and manufacturing stages of the above described electronic device, there are cases where an external apparatus such as a personal computer (hereinafter simply referred to as "PC") is connected to an electronic device to develop or debug software to be written into each IC and terminals to connect the development PC are formed in the main microcontroller and data transmission paths for connecting the terminals with connectors for connection are formed apart from the aforementioned "common data transmission path." Therefore, the circuit space increases by an amount corresponding to the space for forming a data transmission path for connecting the development PC which is only used in the development and manufacturing stages and the main microcontroller and the number of terminals for connection of the main microcontroller also increases.

Furthermore, when using the "method of communicating with a plurality of apparatuses using the same signal line", in the case of the configuration made up of only a "master device" which controls communication and "slave devices", the master device can control the whole communication to avoid data collision, but when "independent devices" which carry out data transmission without control of the master device are connected to the "same signal line", it is no longer possible to avoid data collision per se.

### SUMMARY OF THE INVENTION

In view of the above described problems, it is an object of the present invention to provide an electronic device provided with a plurality of ICs designed to reduce a circuit space by reducing data transmission paths for connecting an external apparatus (PC or the like) for developing or debugging software written into the plurality of ICs and prevent misoperation (unable to read data) of the device due to data collision in the data transmission paths when the external apparatus is connected.

The electronic device according to aspect 1 is an electronic device provided with a plurality of ICs which place terminals for connection with a communication line into a high-impedance state when no data transmission is carried out, configured to perform transmission/reception of digital data between a host IC and a slave IC of the plurality of ICs using a transmission communication line and a reception communication line so that the host IC monitors a signal level of the reception communication line, wherein an external apparatus is connected to the electronic device whose terminals for connection with the communication line are placed into a high-impedance state when no data transmission is carried out and connection connectors for connection with the external apparatus are connected to the communication line so that transmission/reception of digital data between the external apparatus and the host IC are carried out through the transmission communication line and the reception communication line, a first resistor and a second resistor which are resistors to control a signal level generated at a host reception connection terminal which is a terminal for connection of the host IC with the reception communication line are provided by connecting the slave IC to the reception communication line through the first resistor and by connecting the connection connector to the reception communication line through the second resistor, when of signal levels transmitted/received between the slave IC and host IC, a high level is designated as a first signal level, a low level is designated as a second signal level, and a level which becomes a threshold to distinguish between the first signal level and second signal level is designated as a third signal level, a resistance ratio between the first resistor and the second resistor is determined in such a way that when a high level signal from the slave IC and a low level signal from the external apparatus are applied to the reception communication line, the signal level at the host reception connection terminal becomes a fourth signal level which is lower than the first signal level and higher than a third signal level, and when a low level signal from the slave IC and a high level signal from the external apparatus are applied to the reception communication line, the signal level at the host reception connection terminal becomes a fifth signal level which is higher than the second signal level and lower than the third signal level.

According to the above described configuration, when the high level signal from the "slave IC" and the low level signal from the "external apparatus" are superimposed (data collision has occurred on the reception communication line), the signal level at the host reception connection terminal becomes the fourth signal level (level lower than the first signal level and higher than the third signal level) and when the low level signal from the "slave IC" and the high level signal from the "external apparatus" are superimposed (data collision has occurred on the reception communication line), the signal level at the host reception connection terminal becomes the fifth signal level (level higher than the second signal level and lower than the third signal level). Therefore, even when data collision occurs, data from the "slave IC" can be judged (judged whether the signal is at a low level or high level) using the third signal level as a threshold. The "transmission communication line" is a communication line through which transmission data is sent when viewed from the "host IC" (that is, a communication line through which data is received when viewed from the "slave IC" or "external apparatus") and the "reception communication line" is a communication line for the "host IC" to receive data from the "slave IC" or "external apparatus."

The electronic device according to aspect 2 is an electronic device provided with a plurality of ICs which place terminals for connection with a communication line into a high-impedance state when no data transmission is carried out, configured to perform transmission/reception of digital data between a host IC and a slave IC of the plurality of ICs using a transmission communication line and a reception communication line so that the host IC monitors a signal level of the reception communication line, wherein an external apparatus is connected to the electronic device whose terminals for connection with the communication line are placed into a high-impedance state when no data transmission is carried out and connection connectors for connection with the external apparatus are connected to the communication line so that transmission/reception of digital data between the external apparatus and the host IC are carried out through the transmission communication line and the reception communication line, a first resistor and a second resistor which are resistors to control a signal level generated at a host reception connection terminal which is a terminal for connection of the host IC with the reception communication line are provided by connecting the slave IC to the reception communication line through the first resistor and by connecting the connection connector to the reception communication line through the second resistor, when of signal levels transmitted/received between the slave IC and host IC, a high level is designated as a first signal level, a low level is designated as a second signal level, and a level which becomes a threshold to distinguish between the first signal level and second signal level is designated as a third signal level, a resistance ratio between the first resistor and the second resistor is determined in such a way that when a high level signal from the slave IC and a low level signal from the external apparatus are applied to the reception communication line, the signal level at the host reception connection terminal becomes a sixth signal level which is higher than the second signal level and lower than a third signal level, and when a low level signal from the slave IC and a high level signal from the external apparatus are applied to the reception communication line, the signal level at the host reception connection terminal becomes a seventh signal level which is lower than the first signal level and higher than the third signal level.

According to the above described configuration, when the high level signal from the "slave IC" and the low level signal from the "external apparatus" are superimposed (data collision has occurred on the reception communication line), the signal level at the host reception connection terminal becomes the sixth signal level (level higher than the second signal level and lower than the third signal level) and when the low level signal from the "slave IC" and the high level signal from the "external apparatus" are superimposed (data collision has occurred on the reception communication line), the signal level at the host reception connection terminal becomes the seventh signal level (level lower than the first signal level and higher than the third signal level). Therefore, even when data collision has occurred, data from the "external apparatus" can be judged (whether the signal is at a low level or a high level) using the third signal level as a threshold.

The electronic device according to aspect 3 is the electronic device according to aspect 1 or 2, wherein when the signal level at the host reception connection terminal monitored by the host IC is judged to correspond to the fourth signal level or the fifth signal level, the external apparatus is requested to retransmit data after reception of data from the slave IC is completed or when judged to correspond to the sixth signal level or the seventh signal level, the slave IC is requested to retransmit data after reception of data from the external apparatus is completed.

According to the above described configuration, when the signal level at the host reception connection terminal is judged to correspond to the fourth signal level to seventh signal level, it is judged that "data collision has occurred" and after reception of data that can be read even when data collision has occurred is completed, the apparatus which sent the data that could not be read due to data collision is requested to retransmit data.

The electronic device according to aspect 4 is the electronic device according to any one of aspects 1 to 3, wherein the same communication line is used for the transmission communication line and the reception communication line so that data transmission and reception are carried out using a common communication line and the signal level of the communication line is also monitored by the slave IC, a third resistor which is a resistor to control a signal level generated at a slave IC connection terminal which is a terminal for connection of the slave IC with the communication line is provided by connecting the host IC to the communication line through the third resistor, and a resistance ratio between the first resistor, the second resistor and the third resistor is determined in such a way that when a high level signal from the host IC and a low level signal from the external apparatus are applied to the communication line, the signal level at the slave IC connection terminal becomes an eighth signal level which is lower than the first signal level and higher than the third signal level and when a low level signal from the host IC and a high level signal from the external apparatus are applied to the communication line, the signal level at the slave IC connection terminal becomes a ninth signal level which is higher than the second signal level and lower than the third signal level.

According to the above described configuration, data transmission and reception between the master IC and slave IC or external apparatus are carried out through the same communication line, and therefore the data transmitted from the master IC may collide with the data transmitted from the external apparatus on the communication line. In the situation in which such collision has occurred, when the high level signal from the "host IC" and the low level signal from the "external apparatus" are superimposed, the signal level at the slave IC connection terminal becomes the eighth signal level (level lower than the first signal level and higher than the third signal level) and when the low level signal from the "host IC" and the high level signal from the "external apparatus" are superimposed, the signal level at the slave IC connection terminal becomes the ninth signal level (level higher than the second signal level and lower than the third signal level). Therefore, the slave IC can judge data from the "host IC" (whether the signal is at a low level or a high level) using the third signal level as a threshold.

The electronic device according to aspect 5 is the electronic device according to aspect 4, wherein when the signal level at the slave IC connection terminal monitored by the slave IC is judged to correspond to the eighth signal level or the ninth signal level, the external apparatus is requested to retransmit data after reception of data from the host IC is completed.

According to the above described configuration, when the signal level at the slave IC connection terminal is judged to correspond to the eighth signal level or ninth signal level, it is judged that "data collision has occurred", the "external apparatus" is requested to retransmit data (data that could not be read due to data collision) after reception of data from the "host IC" is completed. The "request to the external apparatus for data retransmission" may be directly issued from the "slave IC" (IC that judged the occurrence of collision) to the "external apparatus" or the "slave IC" may inform the "master IC" of the occurrence of collision and the "master IC" may issue the request to the "external apparatus."

The electronic device according to aspect 6 is the electronic device according to any one of aspects 1 to 5, wherein the communication speed of data transmitted from the slave IC or the host IC is made different from the communication speed of data transmitted from the external apparatus.

According to the above described configuration, the communication speed of the data transmitted from the "slave IC" or "host IC" is different from the communication speed of the data transmitted from the "external apparatus", and therefore even when the same data (same signal waveform) is sent simultaneously from the "slave IC" or "host IC" and "external apparatus", a difference in the signal waveform is generated on the communication line, and therefore the low level signal from the "slave IC" or "host IC" and the high level signal from the "external apparatus" are superimposed on the communication line or the high level signal from the "slave IC" or "host IC" and the low level signal from the "external apparatus" are superimposed (when both signals have waveforms only at a high level (or only at a low level), this may not be the case even though the communication speed is different, but a signal only at a high level is substantially not sent).

The data communication control method according to aspect 7 is a data communication control method between a plurality of electronic devices configured to, using a common communication line, carry out transmission/reception of digital data between a host electronic device and a slave electronic device of a plurality of electronic devices which place terminals for connection with a communication line into a high-impedance state when no data transmission is carried out, and transmission/reception of digital data between the host electronic device and an independent electronic device, and configured to monitor a signal level generated at a host connection terminal which is a terminal for connection of the host electronic device with the communication line through the host electronic device, wherein a first resistor and a second resistor which are resistors to control signal levels generated at host connection terminals are provided by connecting the slave electronic device to the communication line through the first resistor and connecting the independent electronic device to the communication line through a second resistor, and when of signal levels transmitted/received between the slave electronic device and the host electronic device, a high level is designated as a first signal level, a low level is designated as a second signal level and a level which becomes a threshold to distinguish between the first signal level and the second signal level is designated as a third signal level, a resistance ratio between the first resistor and the second resistor is determined in such a way that when a high level signal from the slave electronic device and a low level signal from the independent electronic device are applied to the communication line, the signal level at the host connection terminal becomes a fourth signal level which is lower than the first signal level and higher than the third signal level, and when a low level signal from the slave electronic device and a high level signal from the independent electronic device are applied to the communication line, the signal level at the host connection terminal becomes a fifth signal level which is higher than the second signal level and lower than the third signal level, or a resistance ratio between the first resistor and the second resistor is determined when a high level signal from the slave electronic device and a low level signal from the independent electronic device are applied to the communication line, the signal level at the host connection terminal becomes a sixth signal level which is higher than the second signal level and lower than the third signal level, and when a low level signal from the slave electronic device and a high level signal from the independent electronic device are applied to the communication line, the signal level at the host connection terminal becomes a seventh signal level which is lower than the first signal level and higher than the third signal level, so that if the signal level at the host connection terminal monitored by the host electronic device is judged to correspond to the fourth signal level or the fifth signal level, the independent electronic device is requested to retransmit data after reception of data from the slave electronic device is completed or if judged to correspond to the sixth signal level or the seventh signal level, the slave electronic device is requested to retransmit data after reception of data from the independent electronic device is completed.

The data communication control method according to aspect 8 is the data communication control method according to aspect 7, wherein the slave device is also configured to monitor the signal level of the communication line, a third resistor which is a resistor to control a signal level generated at the slave device connection terminal which is a connection terminal with the communication line of the slave electronic device is provided by connecting the host electronic device to the communication line through the third resistor, and a resistance ratio between the first resistor, the second resistor and the third resistor is determined in such a way that when a high level signal from the host electronic device and a low level signal from the independent electronic device are applied to the communication line, the signal level at the slave device connection terminal becomes an eighth signal level which is lower than the first signal level and higher than the third signal level and when a low level signal from the host electronic device and a high level signal from the independent electronic device are applied to the communication line, the signal level at the slave device connection terminal becomes a ninth signal level which is higher than the second signal level and lower than the third signal level, so that if the signal level at the slave device connection terminal monitored by the slave electronic device is judged to correspond to the eighth signal level or the ninth signal level, the independent electronic device is requested to retransmit data after reception of data from the host electronic device is completed.

The data communication control method according to aspect 9 is the data communication control method according to aspect 7 or 8, wherein the communication speed of data transmitted from the slave electronic device or the host electronic device is made different from the communication speed of data transmitted from the independent electronic device.

According to the electronic device according to aspect 1, which is an electronic device provided with a plurality of ICs which place terminals for connection with a communication line into a high-impedance state when no data transmission is carried out, configured to perform transmission/reception of digital data between a host IC and a slave IC of the plurality of ICs using a transmission communication line and a reception communication line so that the host IC monitors a signal level of the reception communication line, wherein an external apparatus is connected to the electronic device whose terminals for connection with the communication line are placed into a high-impedance state when no data transmission is carried out and connection connectors for connection with the external apparatus are connected to the communication line so that transmission/reception of digital data between the external apparatus and the host IC are carried out through the transmission communication line and the reception communication line, a first resistor and a second resistor which are resistors to control a signal level generated at a host reception connection terminal which is a terminal for connection of the host IC with the reception communication line are provided by connecting the slave IC to the reception communication line through the first resistor and by connecting the connection connector to the reception communication line through the second resistor, when of signal levels transmitted/received between the slave IC and host IC, a high level is designated as a first signal level, a low level is designated as a second signal level, and a level which becomes a threshold to distinguish between the first signal level and second signal level is designated as a third signal level, a resistance ratio between the first resistor and the second resistor is determined in such a way that when a high level signal from the slave IC and a low level signal from the external apparatus are applied to the reception communication line, the signal level at the host reception connection terminal becomes a fourth signal level which is lower than the first signal level and higher than a third signal level, and when a low level signal from the slave IC and a high level signal from the external apparatus are applied to the reception communication line, the signal level at the host reception connection terminal becomes a fifth signal level which is higher than the second signal level and lower than the third signal level, the "external apparatus" is connected to the communication line between the "host IC" and "slave IC", and therefore it is possible to reduce "dedicated" communication lines for connecting the "host IC" and "external apparatus" and connection terminals of the "host IC", and thereby reduce the necessary circuit space. Furthermore, when the high level signal from the "slave IC" and low level signal from the "external apparatus" are superimposed, the signal level at the host reception connection terminal becomes the fourth signal level, and when the low level signal from the "slave IC" and the high level signal from the "external apparatus" are superimposed, the signal level at the host reception connection terminal becomes the fifth signal level. Therefore, even in the event of "data collision between the slave IC and the external apparatus" which may be caused by "using the communication line connecting the host IC and slave IC in common with the communication line connecting the host IC and the external apparatus", the "host IC" can correctly read the data from the "slave IC" and can also detect the occurrence of collision.

According to the electronic device according to aspect 3, which is the electronic device according to aspect 1 or 2, wherein when the signal level at the host reception connection terminal monitored by the host IC is judged to correspond to the fourth signal level or the fifth signal level, the external apparatus is requested to retransmit data after reception of data from the slave IC is completed or when judged to correspond to the sixth signal level or the seventh signal level, the slave IC is requested to retransmit data after reception of data from the external apparatus is completed, when the signal level at the host reception connection terminal is judged to correspond to the fourth signal level to seventh signal level, it is judged that "data collision has occurred" and the apparatus which sent data that could not be read due to data collision is requested to retransmit data after reception of data that can be read even when data collision has occurred is completed, and therefore since the "communication line connecting the host IC and slave IC is used in common with the communication line connecting the host IC and external apparatus", even "data collision between the slave IC and external apparatus occurs", the "host IC" can receive data from the "slave IC" and "external apparatus."

According to the electronic device according to aspect 4, which is the electronic device according to any one of aspects 1 to 3, wherein the same communication line is used for the transmission communication line and the reception communication line so that data transmission and reception are carried out using a common communication line and the signal level of the communication line is also monitored by the slave IC, a third resistor which is a resistor to control a signal level generated at a slave IC connection terminal which is a terminal for connection of the slave IC with the communication line is provided by connecting the host IC to the communication line through the third resistor, and a resistance ratio between the first resistor, the second resistor and the third resistor is determined in such a way that when a high level signal from the host IC and a low level signal from the external apparatus are applied to the communication line, the signal level at the slave IC connection terminal becomes an eighth signal level which is lower than the first signal level and higher than the third signal level and when a low level signal from the host IC and a high level signal from the external apparatus are applied to the communication line, the signal level at the slave IC connection terminal becomes a ninth signal level which is higher than the second signal level and lower than the third signal level, data transmission and reception between the master IC and slave IC or external apparatus are carried out through the same communication line, and therefore it is possible to further reduce a circuit space necessary for the communication line and connection terminals of the "host IC." Furthermore, even in the event of collision between data transmitted from the "master IC" and data transmitted from the "external apparatus" caused by this, when the high level signal from the "host IC" and the low level signal from the "external apparatus" are superimposed, the signal level at the slave IC connection terminal becomes the eighth signal level and when the low level signal from the "host IC" and the high level signal from the "external apparatus" are superimposed, the signal level at the slave IC connection terminal becomes the ninth signal level, and therefore the "slave IC" can correctly read the data from the "host IC" and also detect the occurrence of collision.

According to the electronic device according to aspect 5, which is the electronic device according to aspect 4, wherein when the signal level at the slave IC connection terminal monitored by the slave IC is judged to correspond to the eighth signal level or the ninth signal level, the external apparatus is requested to retransmit data after reception of data from the host IC is completed, when the signal level at the slave IC connection terminal is judged to correspond to the eighth signal level or ninth signal level, it is judged that "data collision has occurred" and the "external apparatus" is requested to retransmit data (data that could not be read due to data collision) after reception of data from the "host IC" is completed. Therefore, since the "same communication line is used for data transmission and reception between the master IC and slave IC or external apparatus", even if "data collision between the master IC and external apparatus occurs", the "slave IC" can receive data from the "host IC" and the "host IC" can also receive data from the "external apparatus."

According to the electronic device according to aspect 6, which is the electronic device according to any one of aspects 1 to 5, wherein the communication speed of data transmitted from the slave IC or the host IC is made different from the communication speed of data transmitted from the external apparatus, even when the same data (the same signal waveform) is sent simultaneously from the "slave IC" or "host IC" and "external apparatus", a difference in the signal waveform is generated on the communication line and the low level signal from the "slave IC" or "host IC" and the high level signal from the "external apparatus" are superimposed on the communication line or the high level signal from the "slave IC" or "host IC" and the low level signal from the "external apparatus" are superimposed, and therefore it is possible to effectively detect the occurrence of collision.

### BRIEF DESCRIPTION OF THE DRAWINGS

FIG. 1 is a block diagram schematically showing only a part related to the present invention of a DVD/HDD television;
FIG. 2 is a block diagram with only the part of the data reception line 60 of the DVD/HDD television extracted;
FIG. 3A and 3B are diagrams showing differences in the output states of the DVD microcontroller 20 and PC 2 and their equivalent circuits;
FIG. 4 is diagrams showing differences in the output states of the DVD microcontroller 20 and PC 2 and their equivalent circuits;
FIG. 5A, 5B and 5C are diagrams showing examples of signal waveforms generated on the data reception line 60;
FIG. 6 is a flow chart schematically showing the operation related to the present invention of the DVD/HDD television;
FIG. 7 is a block diagram illustrating a communication scheme between the electronic devices and a method of connection between the electronic devices;
FIG. 8A and 8B are diagrams showing differences in the output states of the host and independent apparatus and their equivalent circuits; and
FIG. 9 is a flow chart schematically showing the operation related to the present invention of the slave apparatus.

### DETAILED DESCRIPTION OF THE PREFERRED EMBODIMENTS

Hereinafter, specific embodiments of the present invention will be explained with reference to the attached drawings. Note that the following embodiments are some aspects in embodying the present invention and are intended by no means to confine the present invention within the range thereof.

### [Embodiment 1]

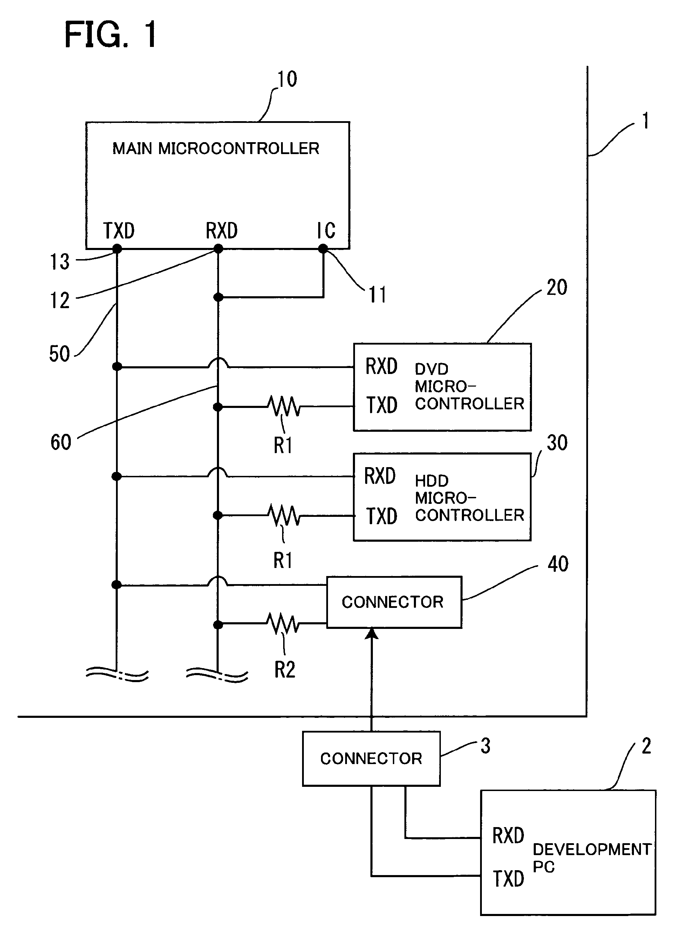

FIG. 1 is a block diagram schematically showing only parts related to the present invention of a television with a built-in DVD recorder and HDD recorder (hereinafter simply referred to as "DVD/HDD television").

As shown in FIG. 1, a DVD/HDD television 1 of this embodiment is provided with a plurality of ICs such as a main microcontroller 10 which controls the entire device, a DVD microcontroller 20 which mainly controls a disk (DVD) device, an HDD microcontroller 30 which mainly controls a hard disk (HDD) device. The main microcontroller 10 (host IC), and DVD microcontroller 20 and HDD microcontroller 30 (slave ICs) are connected by sharing a data transmission line 50 and a data reception line 60 and when the data reception line 60 and a voltage monitoring IC terminal 11 provided for the main microcontroller 10 are connected together, the voltage value of the data reception line 60 (RXD terminal 12) is monitored by the main microcontroller 10. Furthermore, a connector 40 for PC connection is provided for the DVD/HDD television 1 and the connector 40 is connected to the data transmission line 50 and to the data reception line 60 through a resistor R2. Resistors R1 are inserted between the DVD microcontroller 20 and HDD microcontroller 30, and the data reception line 60 and the resistor R2 is inserted between the connector 40 for PC connection and data reception line 60.

With the above described configuration, the DVD/HDD television 1 transmits/receives data between the main microcontroller 10 and DVD microcontroller 20 or HDD microcontroller 30 or between the main microcontroller 10 and PC 2 through the data transmission line 50 (line through which the transmission data from the main microcontroller 10 flows) and data reception line 60 (line through which the transmission data from the DVD microcontroller 20 or HDD microcontroller 30 or PC 2 flows). In this embodiment, communications inside the device are controlled by the main microcontroller 10 and the DVD microcontroller 20 or HDD microcontroller 30 transmits data according to a request (permission of communication) from the main microcontroller 10, and therefore transmission data collision never occurs between the DVD microcontroller 20 and HDD microcontroller 30. On the other hand, since the PC 2 which is an external apparatus transmits data according to an instruction from the user (operator), if the data from the DVD microcontroller 20 or HDD microcontroller 30 is flowing through the data reception line 60 during the data transmission, data collision occurs. Since only transmission data from the main microcontroller 10 flows through the data transmission line 50, data collision never occurs on the data transmission line 50. To distinguish with which of the DVD microcontroller 20, HDD microcontroller 30 and PC 2 a communication is being carried out and to prevent detection of data collision from becoming impossible due to total overlapping of identical waveforms (the signal waveform from the DVD microcontroller 20 or HDD microcontroller 30 and the signal waveform from the PC 2 become the same and totally overlap with each other), this embodiment uses different signal frequencies (communication speeds).

When it is assumed that a signal transmitted/received between the DVD microcontroller 20 or HDD microcontroller 30 and main microcontroller 10 is a signal at a high level: 5 V (first signal level), low level: 0 V (second signal level) and a threshold is 2.5 V (third signal level), then the resistance ratio between the resistor R1 and resistor R2, which are the resistors to control the signal level generated at the RXD terminal 12 is determined in such a way that when a high level signal from the DVD microcontroller 20 or HDD microcontroller 30 and a low level signal from the PC 2 are applied to the data reception line 60, the signal level at the RXD terminal 12 is higher than 2.5 V and lower than 5 V (fourth signal level) and when a low level signal from the DVD microcontroller 20 or HDD microcontroller 30 and a high level signal from the PC 2 are applied to the data reception line 60, the signal level at the RXD terminal 12 is higher than 0 V and lower than 2.5 V (fifth signal level).

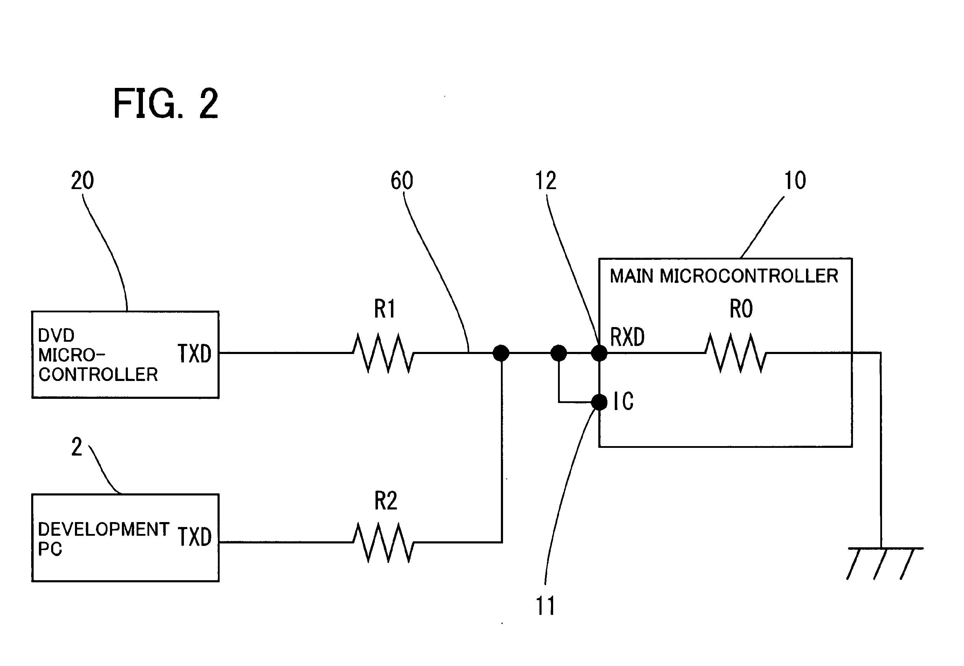

FIG. 2 is a block diagram extracting only the part of the data reception line 60 which is the communication line on which data collision may occur in the DVD/HDD television 1. With regard to the "slave IC", the DVD microcontroller 20 and HDD microcontroller 30 are conceptually the same in explanations of the present invention, and therefore only the DVD microcontroller 20 is shown. R0 denotes an inner resistor of the main microcontroller 10 (placed into a high impedance state by the main microcontroller 10) and shows a sufficiently large resistance value compared to the resistor R1 and resistor R2.

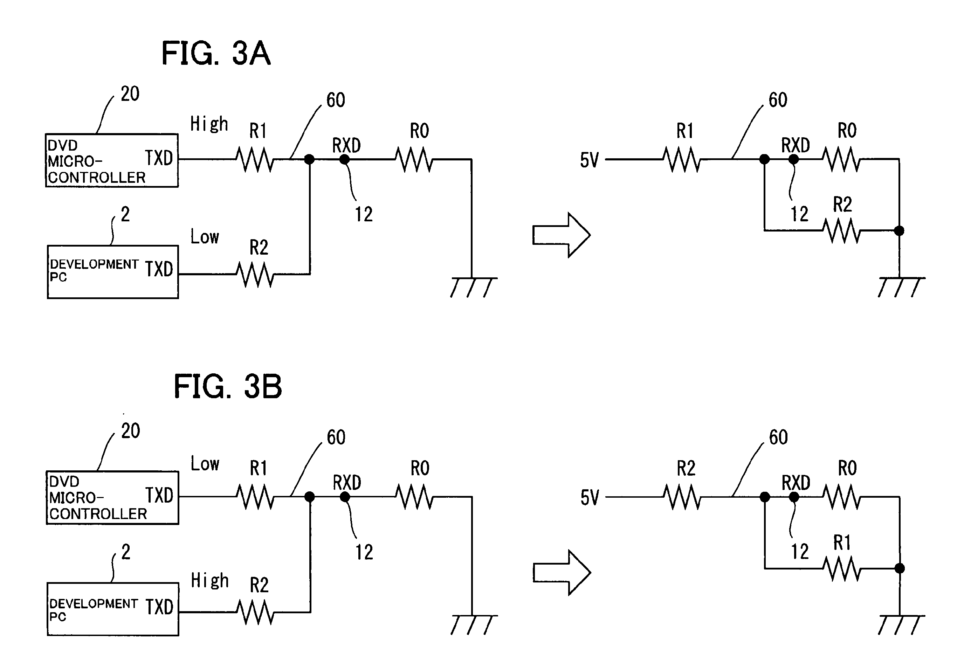

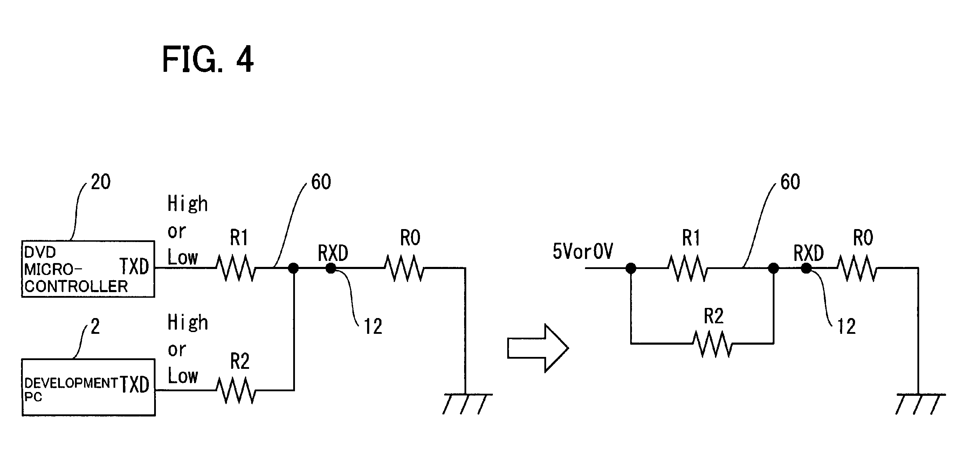

FIG. 3 and FIG. 4 show differences in the output states (signal levels of transmission data) between the DVD microcontroller 20 and PC 2 and show their equivalent circuits. FIG. 3A shows that the high level signal from the DVD microcontroller 20 and the low level signal from the PC 2 are superimposed on the data reception line 60 and as is also apparent from the equivalent circuit on the right side of the same figure, when R2<R0, the voltage level of the RXD terminal 12 is substantially determined (takes a value between approximately 0 V to 5 V) by the resistance ratio between R1 and R2. For example, if it is assumed that the resistance value of R1 is 100 Ω, R2=300 Ω, R0=3 MΩ, the voltage level of the RXD terminal 12 is approximately 3.75 V (higher than 2.5 V (third signal level) and lower than 5 V (first signal level)). FIG. 3B shows that the low level signal from the DVD microcontroller 20 and high level signal from the PC 2 are superimposed on the data reception line 60 and if it is also assumed that R1=100 Ω, R2=300 Ω, R0=3 MΩ, the voltage level of the RXD terminal 12 is approximately 1.25 V (higher than 0 V (second signal level) and lower than 2.5 V (third signal level)).

FIG. 4 shows a case where signals at the same level are outputted from the DVD microcontroller 20 and PC 2 and as is also apparent from the equivalent circuit on the right side of the same figure, when R1<R0 and R2<R0, the voltage level of the RXD terminal 12 is approximately 5 V (when both outputs from the DVD microcontroller 20 and PC 2 are high level) or 0 V (when both outputs are low level). When data transmission is not performed, the DVD microcontroller 20 and PC 2 place the TXD terminal into a high impedance state, and therefore when data is transmitted from only one of the two (when no data collision occurs), the voltage level of the RXD terminal 12 becomes approximately 5 V (when the signal is at a high level) or 0 V (when the signal is at a low level).

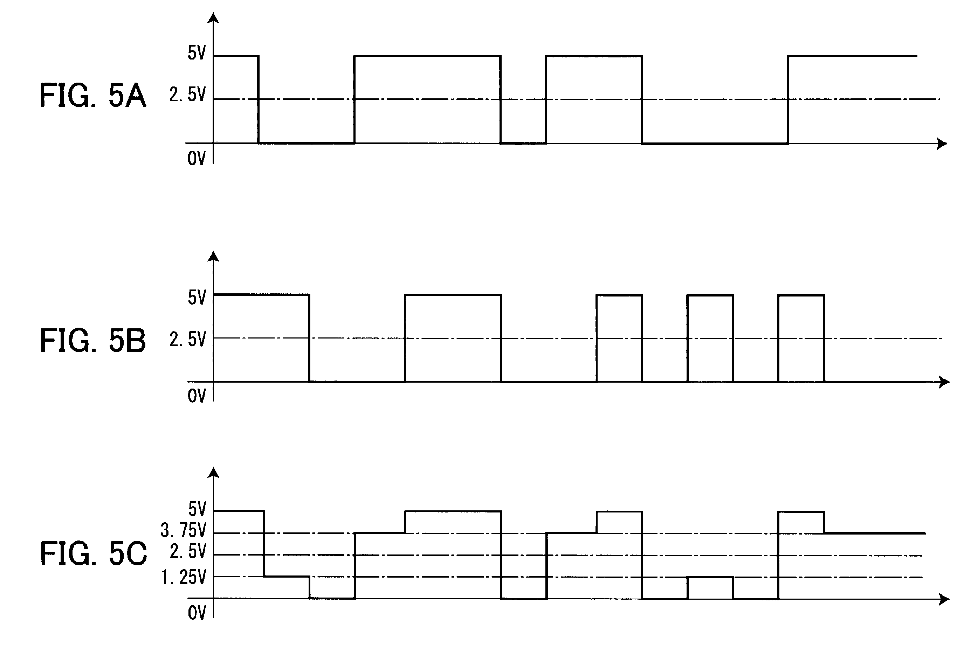

FIG. 5 shows examples of signal waveforms generated on the data reception line 60, FIG. 5A shows a signal waveform outputted from the DVD microcontroller 20 (or HDD microcontroller 30), FIG. 5B shows a signal waveform outputted from the PC 2 and FIG. 5C shows a signal waveform of the RXD terminal 12 when the above described two signals are superimposed. As described above, suppose the output signal levels from the respective apparatuses (DVD microcontroller 20, HDD microcontroller 30, PC 2) are high level: 5 V, low level (second signal level): 0 V and R1=100 Ω, R2=300 Ω, R0=3 MΩ. As shown in FIG. 5C, when collision occurs between the data from the DVD microcontroller 20 (or HDD microcontroller 30) and the data from the PC 2, the RXD terminal 12 becomes approximately 3.75 V in an area where the high level signal from the DVD microcontroller 20 (or HDD microcontroller 30) and the low level signal from the PC 2 overlap with each other, and the RXD terminal 12 becomes approximately 1.25 V in an area where the low level signal from the DVD microcontroller 20 (or HDD microcontroller 30) and the high level signal from the PC 2 overlap with each other. As is also apparent from the same figure, the main microcontroller 10 can read the data from the DVD microcontroller 20 (or HDD microcontroller 30) by reading the data at a threshold of 2.5 V regardless of the presence/absence of data collision.

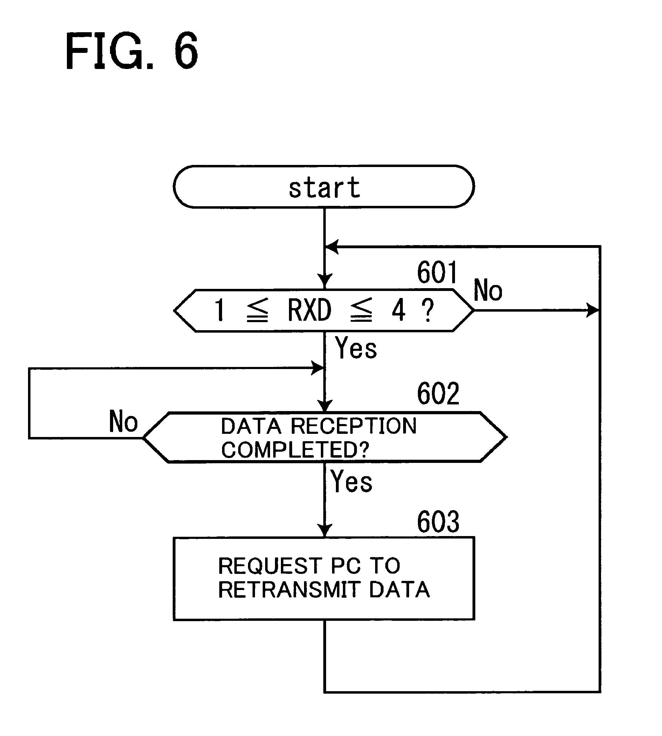

Next, a summary of the operation related to the present invention of the DVD/HDD television 1 of this embodiment having the above described configuration will be explained with reference to FIG. 6.

FIG. 6 is a flow chart showing a summary of the processing (data reception processing) of the main microcontroller 10. The main microcontroller 10 performs data reception using 2.5 V (third signal level) as a threshold and is monitoring the voltage value of the data reception line 60 (RXD terminal 12) through the IC terminal 11. When the monitoring result shows that the signal level of the RXD terminal 12 is not lower than 1 V and not higher than 4 V (that is, when it is judged that the signal level is 1.25 V (fifth signal level) or 3.75 V (fourth signal level)), it is judged that data collision has occurred (step 601), the process moves to step 603 when reception of data is completed (step 602), a retransmission of data that has not been read by the PC 2 is requested (as described above, this is because when data collision occurs, transmission data from the DVD microcontroller 20 or HDD microcontroller 30 can be read, but the transmission data from the PC 2 cannot be read). After step 603, the process moves back to step 601 and the processing is repeated.
"When reception of data is completed" means that when the PC 2 only supports half-duplex communication, reception of data from the "DVD microcontroller 20 (or HDD microcontroller 30) is completed and data transmission by the PC 2 is completed" and this can be judged by the presence/absence of signal detection at the RXD terminal 12. On the other hand, when the PC 2 supports full-duplex communication, "reception of data is completed" may be "when reception of data from the DVD microcontroller 20 (or HDD microcontroller 30) is completed (data transmission by the PC 2 need not necessarily be completed) " (as described above, data from the DVD microcontroller 20 or HDD microcontroller 30 is readable even in the event of data collision, and therefore it is possible to judge whether or not "reception of data from the DVD microcontroller 20 (or HDD microcontroller 30) is completed"). When data collision is detected, it is also possible to adopt such processing as to send a "data transmission abort instruction" to the PC 2.

As shown above, according to the DVD/HDD television 1 of this embodiment, since the "PC 2 (external apparatus)" is connected to the communication line between the "main microcontroller 10 (host IC)" and "DVD microcontroller 20 or HDD microcontroller 30 (slave IC)", it is possible to reduce "dedicated" communication lines and "host IC" connection terminals for connecting the "host IC" and "external apparatus" and reduce the necessary circuit space. Furthermore, even in the event of "collision between data from the slave IC and data from the external apparatus caused by sharing of the communication line connecting the host IC and slave IC with the communication line connecting the host IC and external apparatus", the "host IC" can correctly read data from the "slave IC" and detect the occurrence of collision and can acquire data from the external apparatus that cannot be read through "data collision" through subsequent retransmission processing, and therefore even when "collision between data from the slave IC and data from the external apparatus" occurs, the host IC can correctly read both data.

Furthermore, this embodiment assumes that different signal frequencies (communication speeds) are used for the respective ICs and external apparatus, and therefore even if the same data (same signal waveforms) are simultaneously, sent from the "slave IC" and "external apparatus", a difference in the signal waveform is generated on the communication line and on the communication line, a "state in which the low level signal from the "slave IC" and the high level signal from the "external apparatus" are superimposed" or a "state in which the high level signal from the "slave IC" or "host IC" and the low level signal from the "external apparatus" are superimposed" is produced, and therefore it is possible to effectively detect the occurrence of collision.

This embodiment assumes that the main microcontroller 10 monitors the presence/absence of data collision (FIG. 6: step 601) and requests the PC 2 to retransmit data when data collision is detected (step 603), but some main microcontroller may also be provided with a call-back function for sending back the same inputted data to the externally connected PC, and therefore even if detection of data collision per se is not performed (the processing shown in FIG. 6 is not performed), a device provided with the configuration of this embodiment can perform communications between the ICs in the device (regardless of the presence/absence of collision) without any problem and also on the PC side, since there is no call back when collision occurs (ignored by the main microcontroller 10 because it cannot judge data from the PC 2), the operator using the PC 2 can recognize that "collision has occurred" on the data reception line 60 and can take measures such as "attempting retransmission after a pause." Furthermore, some PC is also provided with a function of retransmitting data when there is no response from the other party (when a time out takes place without any response to the transmission data), and therefore it is also possible to use this function and avoid the processing in FIG. 6.

This embodiment has explained the DVD/HDD television as a specific example of the electronic device, but the target of the present invention is not limited to this and the present invention is applicable to an electronic device provided with a plurality of ICs or various types of electronic device provided with a plurality of ICs configured so as to be able to connect an external apparatus to communicate with an IC incorporated in the device. Furthermore, the data transmission lines (data transmission line 50, data reception line 60) between the ICs are not limited to a serial transmission scheme, but the present invention is also applicable to a parallel transmission scheme (when there is a plurality of transmission paths). In addition, the concept of the "data communication control method" of the present invention is not only applied to the "communication between the ICs in the electronic device" as described above, but the present invention is effectively applicable to a case where an independent electronic device (device capable of carrying out data transmission independently of communication control by the host electronic device) is connected to a communication line for data communication between a host electronic device and a slave electronic device (device whose communication is controlled by the host electronic device) and a communication is carried out between the host electronic device and independent electronic device.

### [Embodiment 2]

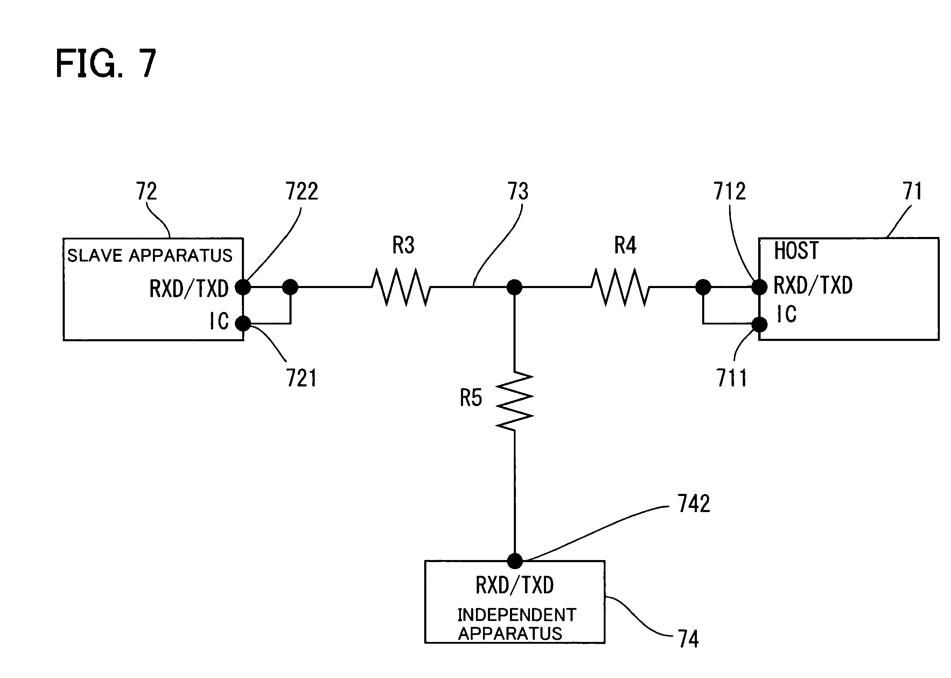

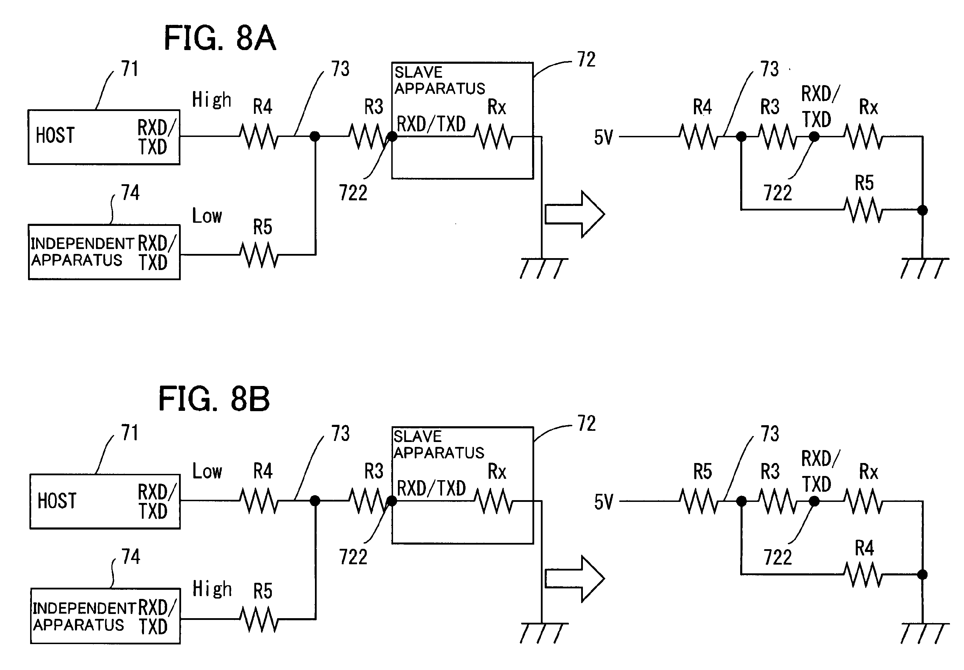

FIG. 7 is a block diagram illustrating a communication scheme between electronic devices and a method of connection between the electronic devices and FIG. 8 shows differences in output (signal level of transmission data) states between host and independent apparatuses and shows their equivalent circuits.

As shown in FIG. 7, host apparatus 71 and slave apparatus (device whose communication is controlled by the host apparatus 71) 72 are mutually connected by each apparatus being connected to a communication line 73 through a resistor R4 and a resistor R3. The communication line 73 (one communication line) is used to transmit/receive data between the host apparatus 71 and slave apparatus 72 (that is, half-duplex communication is carried out between the host apparatus 71 and slave apparatus 72). When no data transmission is carried out between the host apparatus 71 and slave apparatus 72, terminals (RXD/TXD terminals) for connection with the communication line are placed into a high impedance state and the voltage levels of the respective connection terminals (RXD/TXD terminal 712 and RXD/TXD terminal 722) are monitored by voltage monitoring IC terminals (IC terminal 711 and IC terminal 721).

An independent apparatus 74 (device which can carry out data transmission without communication control by the host apparatus 71) is connected through a resistor R5 to the communication line 73 to carry out a communication with the host apparatus 71.

The resistance ratio between the resistor R3 (first resistor) which is a resistor to control the signal level produced at the RXD/TXD terminal 712 (host connection terminal) and the resistor R5 (second resistor) is determined in such a way that assuming, as in the case of the resistor R1 and resistor R2 in Embodiment 1, that signals transmitted/received between the host apparatus 71 and slave apparatus 72 are signals at a high level: 5 V (first signal level) and low level: 0 V (second signal level) and a threshold is 2.5 V (third signal level), when a high level signal from the slave apparatus 72 and a low level signal from the independent apparatus 74 are applied to the communication line 73, the signal level at the RXD/TXD terminal 712 is higher than 2.5V and lower than 5 V (fourth signal level) and when a low level signal from the slave apparatus 72 and a high level signal from the independent apparatus 74 are applied to the communication line 73, the signal level at the RXD/TXD terminal 712 is higher than 0 V and lower than 2.5 V (fifth signal level). Furthermore, the resistance ratio between the resistor R4 (third resistor) which is a resistor to control a signal level produced at the RXD/TXD terminal 722 (slave device connection terminal) and the resistor R5 (second resistor) is determined in such a way that when a high level signal from the host apparatus 71 and a low level signal from the independent apparatus 74 are applied to the communication line 73, the signal level at the RXD/TXD terminal 722 is lower than 5 V and higher than 2.5 V (eighth signal level) and when a low level signal from the host apparatus 71 and a high level signal from the independent apparatus 74 are applied to the communication line 73, the signal level at the RXD/TXD terminal 722 is higher than 0 V and lower than 2.5 V (ninth signal level).

According to the above described configuration, the communication between the host apparatus 71 and slave apparatus 72 is controlled by the host apparatus 71, and therefore data collision never occurs on the communication line 73. On the other hand, the independent apparatus 74 may send data onto the communication line 73 independently of communication control by the host apparatus 71, and therefore data collision may occur on the communication line 73 if there is data transmission from independent apparatus 74 when data is being transmitted from the host apparatus 71 to the slave apparatus 72 or data is being transmitted from the slave apparatus 72 to the host apparatus 71. The concept of processing in the case where data collision occurs on the communication line 73 when data is transmitted from the independent apparatus 74 "when data is being transmitted from the slave apparatus 72 to the host apparatus 71" is similar to that in Embodiment 1 (corresponding to the "main microcontroller 10" replaced by the "host apparatus 71", the "DVD microcontroller 20" replaced by the "slave apparatus 72" and the "PC 2" replaced by the "independent apparatus 74"), and therefore explanations here will be omitted and the concept of processing in a case where data collision occurs on the communication line 73 caused by data transmission from the independent apparatus 74 when "data is being transmitted from the host apparatus 71 to the slave apparatus 72" will be explained.

FIG. 8 shows differences in the output (signal level of transmission data) states of the host apparatus 71 and independent apparatus 74 when data is sent from the host apparatus 71 to the slave apparatus 72 and data is sent from the independent apparatus 74 to the host apparatus 71 (when data collision occurs on the communication line 73) and shows their equivalent circuits. "Rx" denotes an inner resistor (placed into a high impedance state by the slave apparatus 72) of the slave apparatus 72 and has a sufficiently large resistance value compared to the resistor R3 to resistor R5.

FIG. 8A shows a state in which a high level signal from the host apparatus 71 and a low level signal from the independent apparatus 74 are superimposed on the communication line 73 and as is also apparent from the equivalent circuit on the right side of the same figure, when R5<Rx, R3<Rx, the voltage level of the RXD/TXD terminal 722 is substantially determined by the resistance ratio between R4 and R5 (takes a value of approximately 0 V to 5 V), and for example, if the resistance value of R3 is assumed to be 100 Ω, R4=100 Ω, R5=300 Ω, Rx=3 MΩ, the voltage level at the RXD/TXD terminal 722 is higher than approximately 3.75 V (2.5 V (third signal level) and lower than 5 V (first signal level)). FIG. 8B shows a state in which a low level signal from the host apparatus 71 and a high level signal from the independent apparatus 74 are superimposed on the communication line 73 and if it is likewise assumed that R3=100 Ω, R4=100 Ω, R5=300 Ω, Rx=3 MΩ, the voltage level at the RXD/TXD terminal 722 is higher than approximately 1.25 V (0 V (second signal level) and lower than 2.5 V (third signal level)).

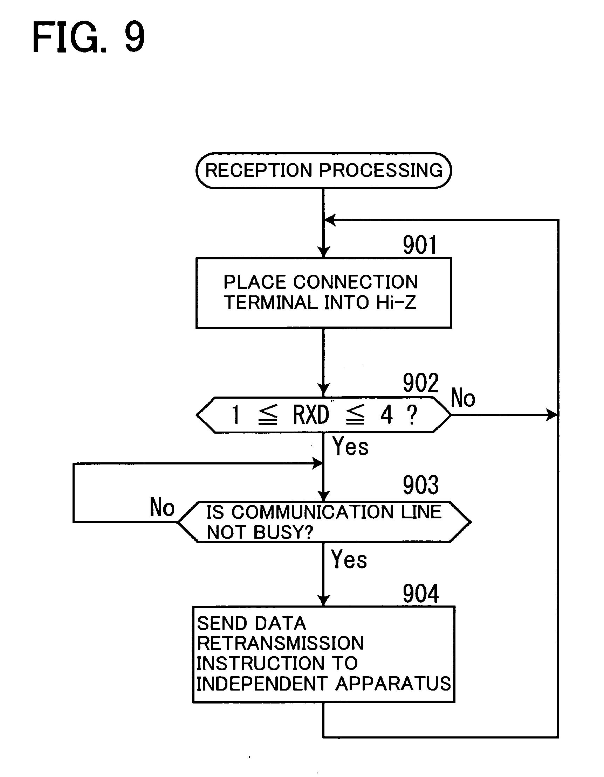

A summary of the operation related to the present invention of the slave apparatus 72 in the above described configuration will be explained with reference to FIG. 9 below.

When no data transmission is carried out, the slave apparatus 72 places the RXD/TXD terminal 722 into a high impedance state (step 901). When data is received, the slave apparatus 72 receives data using 2.5 V (third signal level) as a threshold and monitors the voltage value of the RXD/TXD terminal 722 through the IC terminal 721. When the monitoring result shows that the signal level at the RXD/TXD terminal 722 is not lower than 1 V and not higher than 4 V (that is, the signal level is 1.25 V (ninth signal level) or 3.75 V (eighth signal level)), the slave apparatus 72 judges that data collision has occurred (step 902), moves to step 904 when the communication line 73 is not busy (step 903), and requests the independent apparatus 74 to retransmit transmission data (data which the host apparatus 71 failed to read) when data collision occurred (because when data collision occurs, the slave apparatus 72 can read transmission data from the host apparatus 71 but the host apparatus 71 cannot read transmission data from the independent apparatus 74). After step 904, the slave apparatus 72 moves back to step 901 and repeats the processing.

"When the communication line 73 is not busy" refers to "when reception of data from the host apparatus 71 is completed and data transmission from the independent apparatus 74 is completed" and this can be judged by the presence/absence of signal detection at the RXD/TXD terminal 722. Furthermore, the "request to the independent apparatus 74 for retransmission of transmission data in the event of data collision" may be directly made from the slave apparatus 72 which has detected data collision to the independent apparatus 74 (instructs the independent apparatus 74 to retransmit data to the host apparatus 71) or information that data collision has occurred may be sent from the slave apparatus 72 to the host apparatus 71 and the host apparatus 71 which has received this information may request the independent apparatus 74 for retransmission.

As shown above, according to this embodiment, data transmission and reception between the host apparatus and slave apparatus or independent apparatus are carried out using the same communication line (single communication line), and therefore when applied to the electronic device as shown in Embodiment 1, it is possible to reduce the circuit space further required for the communication line and connection terminals of the "host apparatus (host IC) ." Even in the event of collision between data transmitted from the "host apparatus" and data transmitted from the "independent apparatus" that may be caused by reducing the communication lines to a single communication line, when a high level signal from the "host apparatus" and a low level signal from the "independent apparatus" are superimposed with each other, the signal level at the slave device connection terminal becomes the eighth signal level (3.75 V) and when a low level signal from the "host apparatus" and a high level signal from the "independent apparatus" are superimposed with each other, the signal level at the slave device connection terminal becomes the ninth signal level (1.25 V), and therefore it is possible for the "slave apparatus" to correctly read data from the "host apparatus" (possible to read data using a threshold 2.5 V), detect data collision (collision is judged when the signal level is not lower than 1 V and not higher than 4 V) and when it is judged that "data collision has occurred", the "independent apparatus" is requested to retransmit data (data that could not be read due to data collision), and since "data transmission and reception between the master device and slave apparatus or independent apparatus are carried out using the same communication line, even if "data collision occurs from the master apparatus and independent apparatus", the "slave apparatus" can receive data from the "host apparatus" and the "host apparatus" can also receive data from the "independent apparatus."

In this embodiment, in the event of data collision, the resistance ratio between the respective resistors is determined in such a way that data can be read from the DVD microcontroller 20 (slave IC) or slave apparatus 72 (slave electronic device), but in the event of data collision, it is also possible to determine the resistance ratio between the respective resistors in such a way that data can be read from the PC 2 (external apparatus) or independent apparatus 74 (independent electronic device).

## Claims

1. An electronic device provided with a plurality of ICs which place terminals for connection with a communication line into a high-impedance state when no data transmission is carried out, configured to perform transmission/reception of digital data between a host IC and a slave IC of the plurality of ICs using a transmission communication line and a reception communication line so that the host IC monitors a signal level of the reception communication line,
wherein an external apparatus is connected to the electronic device whose terminals for connection with the communication line are placed into a high-impedance state when no data transmission is carried out and connection connectors for connection with the external apparatus are connected to the communication line so that transmission/reception of digital data between the external apparatus and the host IC are carried out through the transmission communication line and the reception communication line,
a first resistor and a second resistor which are resistors to control a signal level generated at a host reception connection terminal which is a terminal for connection of the host IC with the reception communication line are provided by connecting the slave IC to the reception communication line through the first resistor and by connecting the connection connector to the reception communication line through the second resistor,
when of signal levels transmitted/received between the slave IC and host IC, a high level is designated as a first signal level, a low level is designated as a second signal level, and a level which becomes a threshold to distinguish between the first signal level and second signal level is designated as a third signal level, a resistance ratio between the first resistor and the second resistor is determined in such a way that when a high level signal from the slave IC and a low level signal from the external apparatus are applied to the reception communication line, the signal level at the host reception connection terminal becomes a fourth signal level which is lower than the first signal level and higher than a third signal level, and when a low level signal from the slave IC and a high level signal from the external apparatus are applied to the reception communication line, the signal level at the host reception connection terminal becomes a fifth signal level which is higher than the second signal level and lower than the third signal level.

2. An electronic device provided with a plurality of ICs which place terminals for connection with a communication line into a high-impedance state when no data transmission is carried out, configured to perform transmission/reception of digital data between a host IC and a slave IC of the plurality of ICs using a transmission communication line and a reception communication line so that the host IC monitors a signal level of the reception communication line,
wherein an external apparatus is connected to the electronic device whose terminals for connection with the communication line are placed into a high-impedance state when no data transmission is carried out and connection connectors for connection with the external apparatus are connected to the communication line so that transmission/reception of digital data between the external apparatus and the host IC are carried out through the transmission communication line and the reception communication line,
a first resistor and a second resistor which are resistors to control a signal level generated at a host reception connection terminal which is a terminal for connection of the host IC with the reception communication line are provided by connecting the slave IC to the reception communication line through the first resistor and by connecting the connection connector to the reception communication line through the second resistor,
when of signal levels transmitted/received between the slave IC and host IC, a high level is designated as a first signal level, a low level is designated as a second signal level, and a level which becomes a threshold to distinguish between the first signal level and second signal level is designated as a third signal level, a resistance ratio between the first resistor and the second resistor is determined in such a way that when a high level signal from the slave IC and a low level signal from the external apparatus are applied to the reception communication line, the signal level at the host reception connection terminal becomes a sixth signal level which is higher than the second signal level and lower than a third signal level, and when a low level signal from the slave IC and a high level signal from the external apparatus are applied to the reception communication line, the signal level at the host reception connection terminal becomes a seventh signal level which is lower than the first signal level and higher than the third signal level.

3. The electronic device according to claim 1 or 2, wherein when the signal level at the host reception connection terminal monitored by the host IC is judged to correspond to the fourth signal level or the fifth signal level, the external apparatus is requested to retransmit data after reception of data from the slave IC is completed or when judged to correspond to the sixth signal level or the seventh signal level, the slave IC is requested to retransmit data after reception of data from the external apparatus is completed.

4. The electronic device according to any one of claims 1 to 3, wherein the same communication line is used for the transmission communication line and the reception communication line so that data transmission and reception are carried out using a common communication line and the signal level of the communication line is also monitored by the slave IC,
a third resistor which is a resistor to control a signal level generated at a slave IC connection terminal which is a terminal for connection of the slave IC with the communication line is provided by connecting the host IC to the communication line through the third resistor, and
a resistance ratio between the first resistor, the second resistor and the third resistor is determined in such a way that when a high level signal from the host IC and a low level signal from the external apparatus are applied to the communication line, the signal level at the slave IC connection terminal becomes an eighth signal level which is lower than the first signal level and higher than the third signal level and when a low level signal from the host IC and a high level signal from the external apparatus are applied to the communication line, the signal level at the slave IC connection terminal becomes a ninth signal level which is higher than the second signal level and lower than the third signal level.

5. The electronic device according to claim 4, wherein when the signal level at the slave IC connection terminal monitored by the slave IC is judged to correspond to the eighth signal level or the ninth signal level, the external apparatus is requested to retransmit data after reception of data from the host IC is completed.

6. The electronic device according to any one of claims 1 to 5, wherein the communication speed of data transmitted from the slave IC or the host IC is made different from the communication speed of data transmitted from the external apparatus.

7. A data communication control method between a plurality of electronic devices configured to, using a common communication line, carry out transmission/reception of digital data between a host electronic device and a slave electronic device of a plurality of electronic devices which place terminals for connection with a communication line into a high-impedance state when no data transmission is carried out, and transmission/reception of digital data between the host electronic device and an independent electronic device, and configured to monitor a signal level generated at a host connection terminal which is a terminal for connection of the host electronic device with the communication line through the host electronic device,
wherein a first resistor and a second resistor which are resistors to control signal levels generated at host connection terminals are provided by connecting the slave electronic device to the communication line through the first resistor and connecting the independent electronic device to the communication line through a second resistor, and
when of signal levels transmitted/received between the slave electronic device and the host electronic device, a high level is designated as a first signal level, a low level is designated as a second signal level and a level which becomes a threshold to distinguish between the first signal level and the second signal level is designated as a third signal level, a resistance ratio between the first resistor and the second resistor is determined in such a way that when a high level signal from the slave electronic device and a low level signal from the independent electronic device are applied to the communication line, the signal level at the host connection terminal becomes a fourth signal level which is lower than the first signal level and higher than the third signal level, and when a low level signal from the slave electronic device and a high level signal from the independent electronic device are applied to the communication line, the signal level at the host connection terminal becomes a fifth signal level which is higher than the second signal level and lower than the third signal level, or a resistance ratio between the first resistor and the second resistor is determined when a high level signal from the slave electronic device and a low level signal from the independent electronic device are applied to the communication line, the signal level at the host connection terminal becomes a sixth signal level which is higher than the second signal level and lower than the third signal level, and when a low level signal from the slave electronic device and a high level signal from the independent electronic device are applied to the communication line, the signal level at the host connection terminal becomes a seventh signal level which is lower than the first signal level and higher than the third signal level, so that if the signal level at the host connection terminal monitored by the host electronic device is judged to correspond to the fourth signal level or the fifth signal level, the independent electronic device is requested to retransmit data after reception of data from the slave electronic device is completed or if judged to correspond to the sixth signal level or the seventh signal level, the slave electronic device is requested to retransmit data after reception of data from the independent electronic device is completed.

8. The data communication control method according to claim 7,
wherein the slave device is also configured to monitor the signal level of the communication line,
a third resistor which is a resistor to control a signal level generated at the slave device connection terminal which is a connection terminal with the communication line of the slave electronic device is provided by connecting the host electronic device to the communication line through the third resistor, and
a resistance ratio between the first resistor, the second resistor and the third resistor is determined in such a way that when a high level signal from the host electronic device and a low level signal from the independent electronic device are applied to the communication line, the signal level at the slave device connection terminal becomes an eighth signal level which is lower than the first signal level and higher than the third signal level and when a low level signal from the host electronic device and a high level signal from the independent electronic device are applied to the communication line, the signal level at the slave device connection terminal becomes a ninth signal level which is higher than the second signal level and lower than the third signal level, so that if the signal level at the slave device connection terminal monitored by the slave electronic device is judged to correspond to the eighth signal level or the ninth signal level, the independent electronic device is requested to retransmit data after reception of data from the host electronic device is completed.

9. The data communication control method according to claim 7 or 8, wherein the communication speed of data transmitted from the slave electronic device or the host electronic device is made different from the communication speed of data transmitted from the independent electronic device.
